# EUROPEAN PATENT APPLICATION

(11) **EP 4 748 495 A1**
(43) Date of publication of application: **27.05.2026**
(21) Application number: 24215285.8
(22) Date of filing: 26.11.2024
(51) Int. Cl.: B01J 47/024, H01M 8/04044

(54) **ION EXCHANGER FILTER DEVICE AND ION EXCHANGER CARTRIDGE**

(71) Applicant: MANN+HUMMEL GmbH, 71636 Ludwigsburg (DE)
(72) Inventor: LEININGER, Simon, 71636 Ludwigsburg (DE); WILDERMUTH, Andreas, 71636 Ludwigsburg (DE); EBLE, Jonas, 71636 Ludwigsburg (DE)
(74) Representative: Mann + Hummel Intellectual Property

(57) **Abstract**

An ion exchanger filter device (100), in particular for a fuel cell system, the ion exchanger filter device (100) comprising a housing (102) comprising a cover (112) and at least one inflow opening (104) and at least one outflow opening (106) for a medium, the housing (102) extending in an axial direction (80), and an ion exchanger cartridge (10) being enclosed by the housing (102) and comprising one or more inflow ports (34) at an upstream end (20), and a circumferentially extending wall (32) enclosing a receptacle (16) filled with an ion exchanger material (12), the wall (32) comprising one or more outflow ports (18) at a downstream end (21) opposing the upstream end (20). The upstream end (20) comprises a sealing plane (60) providing a sealing contact to the housing (102), the sealing plane (60) being inclined to the axial direction (80) by an angle (70).

## Description

### Technical Field

Embodiments relate to an ion exchanger filter device, in particular for a fuel cell system, as well as to an ion exchanger cartridge for an ion exchanger filter device.

### Background Art

Fuel cells have an electrical efficiency of approximately 50%. The remainder of the energy is obtained as heat. The latter must be discharged in order to keep the efficiency of the fuel cell as high as possible. For this purpose, a cooling medium flows about the cells. In case the cooling medium is electrically conductive, short circuiting between the cells may occur. Therefore, a deionization by means of an ion exchanger is necessary. Since the cooling liquid must fulfill also further properties such as anti-freezing, mixtures are used here, e.g. deionized water and mono-ethylene glycol in a ratio of 50:50.

Usually an ion exchanger cartridge needs to be sealed against the housing to ensure that the full flow of the cooling liquid passes through the cartridge. Without sealing a significant bypass would establish that lowers the performance/separation efficiency of the ion exchanger. Usually the sealing is ensured by means of an O-ring that is assembled to the ion exchanger cartridge. The sealing plane for a typical design is perpendicular to the flow direction.

US 7837870 B2 discloses an ion removing apparatus including a housing, a first ion removing unit and a second ion removing unit. The housing includes an inlet port, a liquid discharge port and a gas discharge port. The first ion removing unit is disposed within the housing, so that the fluid that has entered the housing via the inlet port flows through the first ion removing unit. The first ion removing unit serves to remove a first ion, such anions, contained in the fluid. The second ion removing unit is disposed within the housing, so that the fluid that has flown though the first ion removing unit flows through the first ion removing unit. The second ion removing unit serves to remove a second ion, such as cations contained in the fluid. The liquid contained in the fluid that has flown through the second ion removing unit is discharged from the liquid discharge port. The gas contained in the fluid that has flown through the second ion removing unit is discharged from the gas discharge port.

US 11050068 B2 discloses an ion exchanger used in a cooling system of a fuel cell system, that includes a communicating tube portion including a first flow path which allows coolant introduced from one side to pass therethrough to the other side; a case portion which is provided to communicate with the communicating tube portion; and a storage body which is assembled to the case portion, has a second flow path in which a part of the coolant branches and flows from the communicating tube portion, and is merged with the communicating tube portion again, and stores an ion exchange resin in the second flow path. An assembled state of the storage body with respect to the case portion is changeable into a plurality of kinds. A proportion of the coolant that flows to the second flow path is changeable by changing the assembled state of the storage body.

### Summary

An object of the embodiments is to provide an improved ion exchanger filter device, in particular for a fuel cell system.

A further object of the embodiments is to provide an ion exchanger cartridge for the improved ion exchanger filter device.

According to an aspect of the embodiments the object is achieved by an ion exchanger filter device, in particular for a fuel cell system, the ion exchanger filter device comprising a housing comprising a cover and at least one inflow opening and at least one outflow opening for a medium, the housing extending in an axial direction, and an ion exchanger cartridge being enclosed by the housing (102) and comprising one or more inflow ports at an upstream end, and a circumferentially extending wall enclosing a receptacle filled with an ion exchanger material, the wall comprising one or more outflow ports at a downstream end opposing the upstream end. The upstream end comprises a sealing plane providing a sealing contact to the housing, the sealing plane being inclined to the axial direction by an angle.

According to a further aspect of the embodiments the further object is achieved by an ion exchanger cartridge for the ion exchanger filter device. The ion exchanger cartridge further comprises a circumferential seal arranged at the sealing plane being inclined to the axial direction by the angle.

Advantageous embodiments are described in the dependent claims, the description and the drawings.

The proposed ion exchanger filter device is provided with an ion exchanger cartridge that exhibits an inclined sealing plane for the inner tightness of the ion exchanger filter device against the housing.

Advantageously space at the upstream region of the housing of the ion exchanger filter device may be used more efficiently. This results in a greater volume of resin as ion exchanger material which may be filled into the ion exchanger cartridge for an increased lifetime of the ion exchanger cartridge.

Due to the inclination of the sealing plane the flow cross section of the medium through the upstream end of the ion exchanger cartridge is increased and the pressure drop can be reduced.

This design can help to reduce turbulences in the upstream region of the housing as well as to ensure a homogenous medium flow through the resin.

According to the embodiments of the ion exchanger filter device, a contact point of the sealing plane to the housing on a side opposing the inflow port may be closer to a projected inflow direction of the medium than a contact point of the sealing plane to the housing on a side of the inflow port. Thus, the upstream end of the ion exchanger cartridge is inclined towards the inflow opening of the ion exchanger filter device. Due to the inclination of the sealing plane the flow cross section of the medium may be increased and the pressure drop can be reduced. This design can help to reduce turbulences in the upstream region of the housing as well as to ensure a homogenous medium flow through the resin.

According to the embodiments of the ion exchanger filter device, the housing may further comprise a guiding groove configured to cooperate with a guiding element of the ion exchanger cartridge, for radial alignment of the ion exchanger cartridge in the housing. Advantageously, the ion exchanger cartridge may be positioned in a defined way in the housing when being mounted to ensure proper positioning of the inclined sealing plane.

According to the embodiments of the ion exchanger filter device, the cover may comprise a connecting means configured to connect to the ion exchanger cartridge. Advantageously, the ion exchanger cartridge and the cover are not firmly connected but by a loose connection, e.g. a bayonet connection.

According to the embodiments of the ion exchanger filter device, the connecting means may be a rotatable bayonet connection, and the cover may be rotatable against the ion exchanger cartridge when mounting the ion exchanger cartridge to the housing. In case the inclined sealing plane is combined with a rotatable bayonet connection, there are further advantages, as an easy removal of the ion exchanger cartridge. Further, there is no rotation of the element resulting in a reduced possible damage of the seal, e.g. an O-ring.

According to the embodiments of the ion exchanger filter device, the cover may comprise an overlap region forming an annular gap between the ion exchanger cartridge and the housing and overlapping the one or more outflow ports in the axial direction. The annular gap may be configured to provide a flow reversal for the medium leaving the one or more outflow ports. The ion exchanger cartridge can be inserted with the overlap region easily into the housing and connected thereto. Due to the overlap, the outflow port can be arranged at the downstream end of the receptacle of the cartridge so that an effective utilization of the ion exchanger material is provided.

According to the embodiments of the ion exchanger filter device, the one or more outflow ports may be arranged upstream of the at least one outflow opening in relation to a flow direction of the medium leaving the one or more outflow ports. An arrangement of the outflow port high up on the housing of the ion exchanger filter device with respect to the direction of gravity can in turn ensure that the ion exchanger filter arrangement can be vented sufficiently well.

The proposed ion exchanger cartridge is provided with an inclined sealing plane for the inner tightness of the ion exchanger filter device against the housing.

Advantageously, space at the upstream region of the housing of the ion exchanger filter device may be used more efficiently. This results in a greater volume of resin as ion exchanger material which may be filled into the ion exchanger cartridge for an increased lifetime of the ion exchanger cartridge.

Due to the inclination of the sealing plane the flow cross section of the medium through the upstream end of the ion exchanger cartridge is increased and the pressure drop can be reduced.

This design can help to reduce turbulences in the upstream region of the housing of the ion exchanger filter device as well as to ensure a homogenous medium flow through the resin.

According to the embodiments, the ion exchanger cartridge may further comprise a guiding element configured to cooperate with a guiding groove of the housing, for radial alignment of the ion exchanger cartridge in the housing. Advantageously, the ion exchanger cartridge may be positioned in a defined way in the housing when being mounted to ensure proper positioning of the inclined sealing plane.

According to the embodiments of the ion exchanger cartridge, the guiding element may protrude from the wall, in particular from a side of the wall having a greatest length in the axial direction. Thus, the guiding element may advantageously cooperate with the guiding groove of a housing of the ion exchanger filter device for radial alignment in the housing when being mounted to the housing. Proper radial positioning of the ion exchanger cartridge in the housing is facilitated.

According to the embodiments of the ion exchanger cartridge, the guiding element may comprise a radial projection. This is particularly advantageous for radial positioning of the ion exchanger cartridge in the gap region of the housing where the guiding groove is enlarged in a radial extension.

According to the embodiments, the ion exchanger cartridge may further comprise a lead-in chamfer at the upstream end. Thus, inserting the ion exchanger cartridge into the housing may properly be achieved.

According to the embodiments of the ion exchanger cartridge, the ion exchanger cartridge may further comprise at least one bayonet element arranged at the downstream end and configured to connect to a connecting means, in particular a rotatable bayonet connection, of the cover. In case the bypass is combined with a rotatable bayonet connection, there are further advantages, as an easy removal of the ion exchanger cartridge. Further, a rotation of the element does not occur resulting in a reduced possible damage of the seal, e.g. an O-ring.

### Brief Description of Drawings

The embodiments together with the above-mentioned and other objects and advantages may best be understood from the following detailed description of the embodiments, but not restricted to the embodiments.
Figure 1 shows an ion exchanger filter device, in particular for a fuel cell system, according to the embodiments in an isometric view.
Figure 2 shows the ion exchanger cartridge with the cover of the ion exchanger filter device mounted in isometric view.
Figure 3 shows the ion exchanger cartridge according to the embodiments in an isometric view.
Figure 4 is a side view of the ion exchanger cartridge.
Figure 5 is a sectional view of the ion exchanger cartridge.

### Description of Embodiments

In the drawings, like elements are referred to with equal reference numerals. The drawings are merely schematic representations, not intended to portray specific parameters of the embodiments. Moreover, the drawings are intended to depict only typical embodiments of the embodiments and therefore should not be considered as limiting the scope of the embodiments.

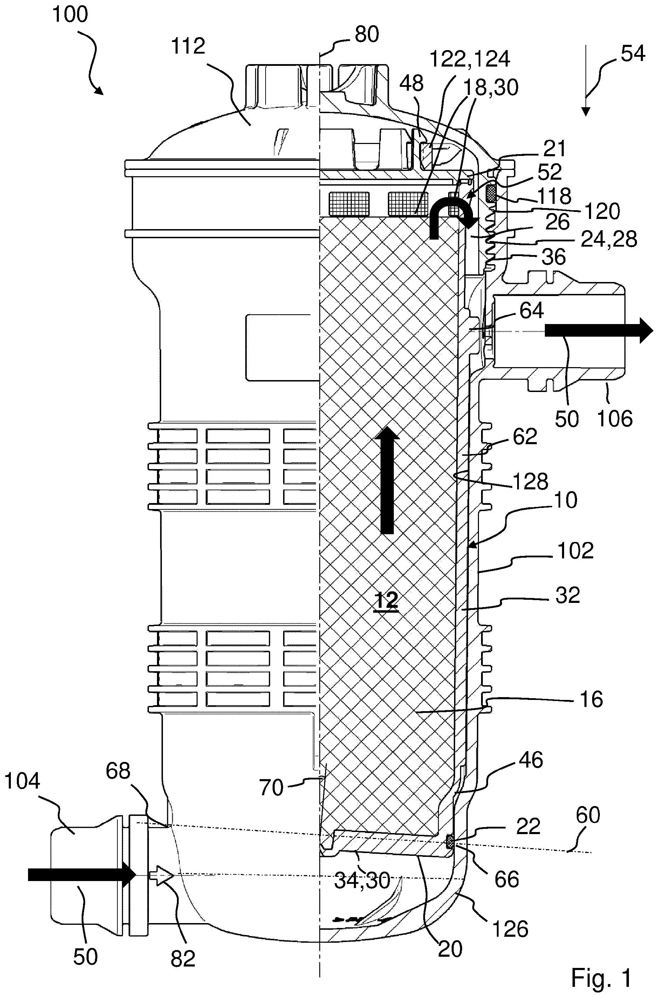

Figure 1 depicts an ion exchanger filter device 100, in particular for a fuel cell system, according to the embodiments in an isometric view.

The ion exchanger filter device 100 comprises a housing 102 with a cover 112 and at least one inflow opening 104 and at least one outflow opening 106 for a medium. The housing 102 extends in an axial direction 80 and encloses an ion exchanger cartridge 10 with an inflow port 34 at an upstream end 20 and with a circumferentially extending wall 32 enclosing a receptacle 16 filled with an ion exchanger material 12. The wall 32 comprises one or more outflow ports 18 distributed at or about a circumference of the circumferentially extending wall 32 at a downstream end 21, the downstream end 21 opposing the upstream end 20.

The upstream end 20, shown as an essentially plane end surface in the Figure, is inclined by an angle 70 compared to the downstream end 21 having the one or more outflow ports 18 and compared to the axial direction 80. The upstream end 20 is provided with a sealing plane 60 defined by a sealing contact to the housing 102. The sealing plane 60 is inclined to the axial direction 80 by the angle 70.

As may be seen from Figure 1, with this design of the ion exchanger cartridge 10, a contact point 66 of the sealing plane 60 with the housing 102 opposing the inflow port 34 is closer to a projected inflow direction 82 of the medium than a contact point 68 on a side of the inflow port 34.

Compared to the embodiments shown in Figure 1, the angle 70 may even be chosen larger than shown. Then the sealing plane 60 may even be positioned deeper into the round section of the upstream region of the housing 102.

Advantageously, space at the upstream region of the housing 102 of the ion exchanger filter device 100 may be used more efficiently. This results in a greater volume of resin as ion exchanger material 12 which may be filled into the ion exchanger cartridge 10 for an increased lifetime of the ion exchanger cartridge 10.

Due to the inclination of the sealing plane 60 the flow cross section of the medium through the upstream end 20 of the ion exchanger cartridge 10 is increased and the pressure drop can be reduced.

This design can help to reduce turbulences in the upstream region of the housing 102 of the ion exchanger filter device 100 as well as to ensure a homogenous medium flow through the resin.

The ion exchanger cartridge 10 comprises a guiding element 62 for cooperation with a guiding groove 128 of the housing 102 of the ion exchanger filter device 100 for radial alignment in the housing 102 when being mounted to the housing 102. The guiding element 62 is arranged protruding from the wall 32, in particular on a side of the wall 32 with a greatest length in axial direction 80. The housing 102 is provided with the guiding groove 128.

The guiding element 62 is configured with a radial projection 64. This is particularly advantageous for radial positioning of the ion exchanger cartridge 10 in the gap 26 of the housing 102 where the guiding groove 128 is enlarged in a radial extension.

The ion exchanger cartridge 10 is provided with a lead-in chamfer 46 at the upstream end 20 for proper and easy positioning in the housing 102.

The ion exchanger cartridge 10 is provided with a circumferential seal 22, in particular an O-ring, for sealing against the inner wall of the housing 102.

The cover 112 is connected to the ion exchanger cartridge 10 by a connecting means 122, in particular by a bayonet connection. The connecting means 122 is a rotatable bayonet connection 124, wherein the cover 112 is rotatable against the ion exchanger cartridge 10 when mounting the ion exchanger cartridge 10 to the housing 102.

A rotation of the ion exchanger cartridge 10 does not occur which results in a reduced possible damage of the seal 22.

Therefore, a number of bayonet elements 48 are arranged at the downstream end 21 for being connected to the connecting means 122, in particular to the rotatable bayonet connection 124 of the cover 112.

Further, the cover 112 comprises an overlap region 24 forming an annular gap 26 between the ion exchanger cartridge 10 and the housing 102 and overlapping the one or more outflow ports 18 in the axial direction 80.

A main flow path 50, depicted by arrows, through the ion exchanger cartridge 10 is provided for the medium between the inflow port 34 and the one or more outflow ports 18. As may be seen from the Figure, the annular gap 26 provides a deflection 52 of the flow path 50 for a flow reversal for the medium leaving the one or more outflow ports 18. The outflow ports 18 are arranged upstream of the at least one outflow opening 106 in relation to the flow direction of the medium leaving the one or more outflow ports 18.

The overlap region 24 is embodied as a connection section 28 configured to connect the ion exchanger cartridge 10 to the housing 102 of the ion exchanger filter device 100.

Advantageously, the connection section 28 is a thread section 36, wherein the thread section 36 comprises an outer thread for being mounted to the counter thread 120 of the housing 102. A radial seal 118, e.g. an O-ring, is provided for sealing between cover 112 and housing 102.

In Figure 1 a direction 54 of gravity is marked because the ion exchanger filter device 100 is usually operated in this position where the medium enters the housing 102 at the inflow opening 104, is then pumped through the ion exchanger cartridge 10 from the upstream end 20 to the downstream end 21 where the medium leaves the ion exchanger cartridge 10 through the outflow ports 18. The medium then flows around the gap 26 of the cover 112 to the outflow opening 106 leaving the housing 102.

Alternatively the ion exchanger filter device 100 may also be operated in another position, e.g. in a position rotated by 90° extending in a horizontal axis.

The ion exchanger cartridge 10 is provided with the lead-in chamfer 46 at the upstream end 20 for proper and easy positioning in the housing 102.

The ion exchanger cartridge 10 is provided with a circumferential seal 22, in particular an O-ring, for sealing against the inner wall of the housing 102.

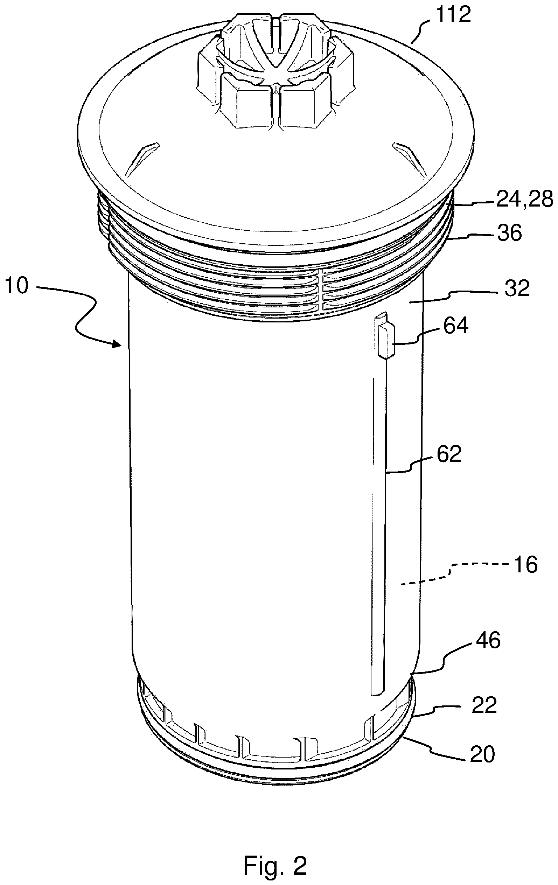

Figure 2 depicts in isometric view the ion exchanger cartridge 10 with the cover 112 of the ion exchanger filter device 100 mounted.

The cover 112 is connected to the ion exchanger cartridge 10 via the connecting means 122 as depicted before in Figure 1.

The ion exchanger cartridge 10 comprises the circumferentially extending wall 32 enclosing the receptacle 16 filled with the ion exchanger material 12.

The guiding element 62 for cooperation with the guiding groove 128 of the housing 102 of the ion exchanger filter device 100 for radial alignment in the housing 102 when being mounted to the housing 102 is arranged protruding from the wall 32. In particular the guiding element 62 is arranged on a side of the wall 32 with a greatest length in axial direction 80. As may be seen from the Figure, the guiding element 62 is configured with a radial projection 64.

The upstream end 20 of the ion exchanger cartridge 10 is provided with the circumferential seal 22.

The overlap region 24 of the cover 112 is provided with the outward facing thread section 36 and with the circumferential seal 118 for being connected and sealed with the housing 102 of the ion exchanger filter device 100.

The ion exchanger cartridge 10 further is provided with the lead-in chamfer 46 at the upstream end 20 for proper and easy positioning in the housing 102.

Further, the ion exchanger cartridge 10 is provided with the circumferential seal 22, in particular an O-ring, for sealing against the inner wall of the housing 102.

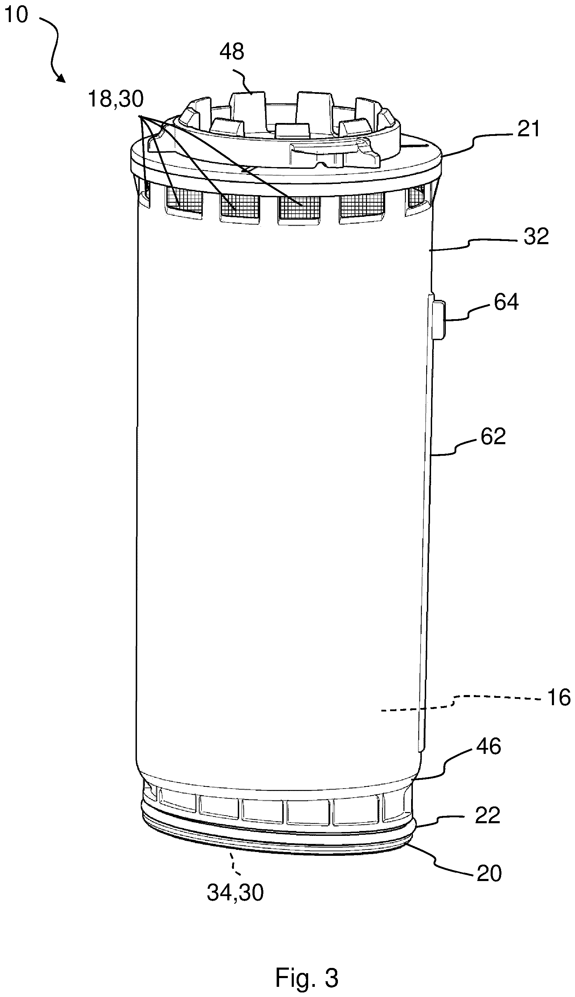

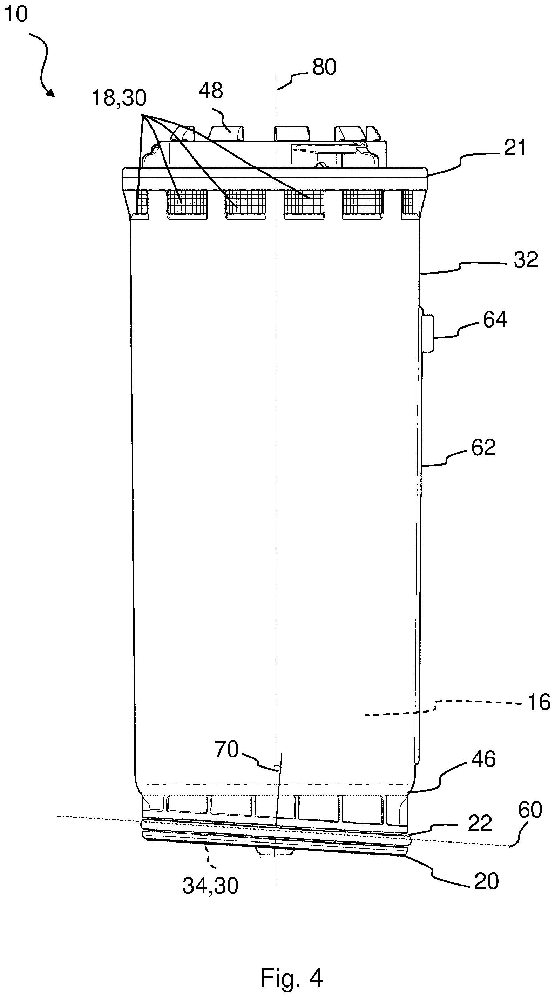

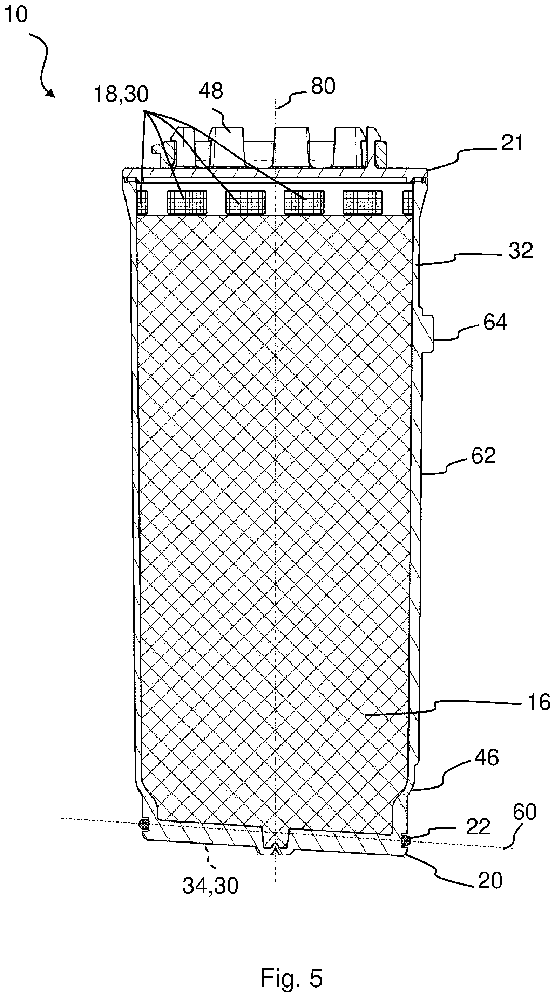

Figure 3 depicts the ion exchanger cartridge 10 according to the embodiments in an isometric view. In Figure 4 a side view of the ion exchanger cartridge 10 is shown, whereas in Figure 5 a sectional view of the ion exchanger cartridge 10 is depicted.

The ion exchanger cartridge 10 comprises the circumferentially extending wall 32 enclosing the receptacle 16 filled with a resin as the ion exchanger material 12. The wall 32 comprises a number of outflow ports 18 distributed at or about the circumference of the circumferentially extending wall 32.

As may particularly be seen from Figures 4 and 5, the upstream end 20 is inclined by an angle 70 compared to a downstream end 21 having the outflow ports 18 and compared to the axial direction 80, the downstream end 21 opposing the upstream end 20.

The upstream end 20 is configured to provide the circumferential seal 22 at the upstream end 20 defining the sealing plane 60 being inclined by the angle 70 to the axial direction 80.

The ion exchanger cartridge 10 comprises the guiding element 62 for cooperation with the guiding groove 128 of the housing 102 of the ion exchanger filter device 100 for radial alignment in the housing 102 when being mounted to the housing 102. The guiding element 62 is arranged protruding from the wall 32, in particular on a side of the wall 32 with a greatest length in axial direction 80. Further, the guiding element 62 is configured with a radial projection 64.

An improvement of the manufacturing process of the ion exchanger cartridge 10 can advantageously be obtained by a cartridge container with insert-molded screen fabric, wherein the screen fabric covers the inflow port 34 as well as the outflow ports 18 of the ion exchanger cartridge. Advantage of this design is that only at one component insert molding is required. In this context, the inflow port 34 is ideally oriented vertically and the outflow ports 18 are radially oriented in relation to the axial direction 80 of the ion exchanger cartridge 10.

The ion exchanger cartridge 10 further is provided with the lead-in chamfer 46 at the upstream end 20 for easy inserting of the ion exchanger cartridge 10 in the housing 102.

As may be seen from the Figures, bayonet elements 48 are arranged at the downstream end 21 for being connected to the connecting means 122. In particular, the bayonet elements 48 are configured as a rotatable bayonet connection 124 of the cover 112 of the ion exchanger filter device 100.

### Reference Signs List

- 10: ion exchanger cartridge
- 12: ion exchanger material
- 16: receptacle
- 18: outflow port
- 20: upstream end
- 21: downstream end
- 22: seal
- 24: overlap region
- 26: gap
- 28: connection section
- 30: screen fabric
- 32: wall
- 34: inflow port
- 36: thread section
- 46: chamfer
- 48: bayonet element
- 50: flow path
- 52: deflection
- 54: direction of gravity
- 60: inclined sealing plane
- 62: guiding element
- 64: projection
- 66: contact point
- 68: contact point
- 70: angle
- 80: axial direction70
- 82: inflow direction
- 100: ion exchanger filter device
- 102: housing
- 104: inflow opening
- 106: outflow opening
- 112: cover
- 114: central opening
- 118: seal
- 120: counter thread
- 122: connecting means
- 124: bayonet connection
- 126: round section
- 128: guiding groove

## Claims

1. An ion exchanger filter device (100), in particular for a fuel cell system, the ion exchanger filter device (100) comprising:
a housing (102) comprising a cover (112) and at least one inflow opening (104) and at least one outflow opening (106) for a medium, the housing (102) extending in an axial direction (80); and
an ion exchanger cartridge (10) being enclosed by the housing (102) and comprising one or more inflow ports (34) at an upstream end (20), and a circumferentially extending wall (32) enclosing a receptacle (16) filled with an ion exchanger material (12), the wall (32) comprising one or more outflow ports (18) at a downstream end (21) opposing the upstream end (20),
wherein the upstream end (20) comprises a sealing plane (60) providing a sealing contact to the housing (102), the sealing plane (60) being inclined to the axial direction (80) by an angle (70).

2. The ion exchanger filter device (100) according to claim 1, wherein a contact point (66) of the sealing plane (60) to the housing (102) on a side opposing the one or more inflow ports (34) is closer to a projected inflow direction (82) of the medium than a contact point (68) of the sealing plane (60) to the housing (102) on a side of the one or more inflow ports (34).

3. The ion exchanger filter device (100) according to claim 1 or 2, wherein the housing (102) further comprises a guiding groove (128) configured to cooperate with a guiding element (62) of the ion exchanger cartridge (10), for radial alignment of the ion exchanger cartridge (10) in the housing (102).

4. The ion exchanger filter device (100) according to any one of preceding claims, wherein the cover (112) comprises a connecting means (122) configured to connect to the ion exchanger cartridge (10).

5. The ion exchanger filter device (100) according to claim 4, wherein the connecting means (122) is a rotatable bayonet connection (124), and
wherein the cover (112) is rotatable against the ion exchanger cartridge (10) when mounting the ion exchanger cartridge (10) to the housing (102).

6. The ion exchanger filter device (100) according to any one of preceding claims, wherein the cover (112) comprises an overlap region (24) forming an annular gap (26) between the ion exchanger cartridge (10) and the housing (102) and overlapping the one or more outflow ports (18) in the axial direction (80), and
wherein the annular gap (26) is configured to provide a flow reversal for the medium leaving the one or more outflow ports (18).

7. The ion exchanger filter device (100) according to any one of preceding claims, wherein the one or more outflow ports (18) are arranged upstream of the at least one outflow opening (106) in relation to a flow direction of the medium leaving the one or more outflow ports (18).

8. An ion exchanger cartridge (10) for the ion exchanger filter device (100) according to any one of preceding claims,
wherein the ion exchanger cartridge (10) further comprises a circumferential seal (22) arranged at the sealing plane (60) being inclined to the axial direction (80) by the angle (70).

9. The ion exchanger cartridge (10) according to claim 8, further comprising a guiding element (62) configured to cooperate with a guiding groove (128) of the housing (102), for radial alignment of the ion exchanger cartridge (10) in the housing (102).

10. The ion exchanger cartridge (10) according to claim 9, wherein the guiding element (62) protrudes from the wall (32), in particular from a side of the wall (32) having a greatest length in the axial direction (80).

11. The ion exchanger cartridge (10) according to claim 9 or 10, wherein the guiding element (62) comprises a radial projection (64).

12. The ion exchanger cartridge (10) according to any one of claims 8 to 11, further comprising a lead-in chamfer (46) arranged at the upstream end (20).

13. The ion exchanger cartridge (10) according to any one of claims 8 to 12, further comprising at least one bayonet element (48) arranged at the downstream end (21) and configured to connect to a connecting means (122), in particular a rotatable bayonet connection (124), of the cover (112).
